# EUROPÄISCHE PATENTSCHRIFT

(11) **EP 1 681 215 B1**
(45) Veröffentlichungstag und Bekanntmachung des Hinweises auf die Patenterteilung: **26.10.2011**
(21) Anmeldenummer: 06007951.4
(22) Anmeldetag: 08.06.2002
(51) Int. Cl.: B60S 1/04

(54) **Befestigungsanordnung einer Scheibenwischeranlage**
Mounting arrangement of a windscreen wiper device
Dispositif de fixation d'un ensemble essuie-glace

(30) Priorität: 06.09.2001 DE 10143610
(43) Veröffentlichungstag der Anmeldung: 19.07.2006
(62) Teilanmeldung aus: 02012758.5
(73) Patentinhaber: ROBERT BOSCH GMBH, 70442 Stuttgart (DE)
(72) Erfinder: Boos, Tino, 76532 Baden-baden (DE); Dietrich, Jan, 77815 Buehl (DE); Muehlpforte, Kurt, 77815 Buehl (DE); Fleischer, Claus, 77815 Buehl (DE); Kalchschmidt, Peter, 76646 Bruchsal Untergromb. (DE)
(74) Vertreter: Raue, Reimund

(56) Entgegenhaltungen:
- EP-A- 1 125 805
- FR-A- 2 770 880
- US-A- 4 641 983
- US-A- 5 562 357
- US-A- 6 027 157
- US-B1- 6 168 223

## Beschreibung

### Stand der Technik

Die Erfindung geht von einer Befestigungsanordnung einer Scheibenwischeranlage nach dem Oberbegriff des Anspruchs 1 aus.

Wischeranlagen für Kraftfahrzeuge werden mit einem Wischerträger, einer so genannten Platine bzw. Rohrplatine - wenn der Wischerträger Elemente aus Rohren enthält -, an der Fahrzeugkarosserie eines Kraftfahrzeugs befestigt. Die Platine umfasst eine Motorplatine, die einen Wischerantrieb mit einem Wischermotor und einem daran angebauten Getriebe trägt.

Antriebswellen der Scheibenwischer sind in Wischerlagern gelagert, deren Lagergehäuse an den Enden der Platine befestigt oder angeformt sind. Die Platine ist unmittelbar über die Lagergehäuse oder über Befestigungsaugen, die am Lagergehäuse, an der Platine und/oder der Motorplatine angeformt sind, durch Schrauben an einer Fahrzeugkarosserie befestigt. In der Regel werden die Platinen aus vielen Bauteilen zusammengesetzt. Dies führt zu zahlreichen Schnittstellen mit entsprechenden Toleranzen. Ferner ist die Befestigung mittels Schrauben aufwendig und die Montagekosten sind hoch.

Aus der DE 198 29 320 A1 ist eine solche Rohrplatine bekannt, die über vier Befestigungsaugen mit der Fahrzeugkarosserie verschraubt wird.

Aus der der US-B-6 168 223 ist eine Wischeranlage bekannt, die eine Rohrplatine besitzt. Diese ist im Bereich der Wischerlager und im Bereich des Antriebsaggregats über Steckverbindungen mit der Karosserie verbunden. Dabei kann die Steckverbindung im Bereich des Antriebselements ein Schnappelement aufweisen. Hierbei besitzt ein Befestigungselement, das mit der Motorplatine verbunden ist, einen Kopf, der durch eine Öffnung eines Gummielements gedrückt werden kann, das in einem Karosserieteil gehalten ist. Im montierten Zustand liegt der Kopf mit einer Schulter axial an einer Stirnfläche des Gummielements an und sichert die Platine entgegengesetzt zur Montagerichtung.

Aus der GB-A-2228188 ist eine Befestigungsanordnung einer Scheibenwischeranlage bekannt, die mittels einer Platine an mehreren Stellen an einer Fahrzeugkarosserie befestigt ist. Die Platine besitzt an ihren Befestigungsarmen gabelförmige Enden mit einer isolierten Durchführung. Die äußere Umfangsfläche der isolierten Durchführung besitzt eine Aussparung, die in das kabelförmige Ende passt, sodass die isolierte Durchführung vollständig in das gabelförmige Ende montiert werden kann. Die isolierte Durchführung besitzt an der offenen Seite des kabelförmigen Endes einen Schlitz, dessen Weite etwas kleiner ist als der äußere Durchmesser eines entsprechenden Bolzens, der mit einem Ende an der Fahrzeugkarosserie befestigt ist. Der Bolzen kann einfach in die Aufnahmebohrung eingefügt werden, in dem er seitlich in den Schlitz der Befestigungsarme gedrückt wird und dabei die isolierte Durchführung elastisch verformt, bis er in den Aufnahmesitz einschnappt. Auf Grund der Gestaltung kann die Stabilität in allen Richtungen gewährleistet werden, nämlich vertikal, in Längsrichtung und seitlich mit Ausnahme in Richtung des freien Endes des Bolzens und in Richtung des Schlitzes.

### Offenbarung der Erfindung

Die erfindungsgemäße Anordnung ist durch die Merkmale des Anspruchs 1 definiert.

Nach der Erfindung hat der Kopf des Befestigungselements die Gestalt einer Kugel und das Gegenstück weist einen Kugelsitz auf. Das Schnappelement, gebildet aus dem Befestigungselement und dem Gegenstück, wird bei der Montage zusammengefügt, indem die Teile ineinander gepresst werden. Eine derartige Montage der Platine ist einfach, da zusätzliche Bauteile, wie beispielsweise Schrauben oder Schraubenmuttern entfallen. Neben diesen Materialeinsparungen kann gleichzeitig auf die bei Schraubverbindungen relativ aufwendigen Befestigungselemente an der Platine und der Fahrzeugkarosserie verzichtet werden, wodurch der Fertigungsaufwand reduziert wird. Zudem entfallen Schraubvorgänge, sodass auch die Montagezeit verkürzt ist.

Zweckmäßigerweise ist das Befestigungselement an der Fahrzeugkarosserie ortsfest angeordnet. Ein entsprechendes Gegenstück, das den Kugelsitz aufweist und mit der Platine verbunden ist, wird bei der Montage auf den Kopf aufgepresst und rastet ein. Das Gegenstück wird zweckmäßigerweise unter Zwischenschalten eines Entkopplungselements, das beim Herstellen der Platine eingespritzt wird, in die Platine eingesetzt. Der Kopf und das Gegenstück können so gestaltet werden, dass sie für die Platine verschiedene Freiheitsgrade zum Ausrichten zulassen.

Bei einer ersten und zweiten Ausführungsform erlaubt das erfindungsgemäße Schnappelement drei rotatorische Freiheitsgrade. In einer Ausgestaltung der Erfindung ist der Kugelsitz als Längsführung mit zwei einander gegenüberliegenden Führungsnuten ausgebildet, in denen der Kopf des Befestigungselements geführt ist, sodass er zu den drei rotatorischen Freiheitsgraden noch einen translatorischen Freiheitsgrad besitzt.

Nach einer weiteren Ausgestaltung kann der Kopf des Befestigungselements auch zwei parallele Anlageflächen aufweisen und zwischen einer Stirnfläche und einer Anlagefläche des Gegenstücks geführt sein. Dabei kann das Befestigungselement innerhalb eines Abstands zwischen einer äußeren Umfangsfläche seines Kopfs und einer inneren Umfangsfläche einer Aufnahmekammer des Gegenstücks bzw. innerhalb eines Spiels zwischen dem Befestigungselement und dem Gegenstück in einer Ebene allseitig ausgerichtet werden, sodass sich in den angegebenen Grenzen zwei translatorische Freiheitsgrade ergeben.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Darstellung einer Platine,
Fig. 2 einen Schnitt entsprechend der Linie II-II in Fig. 1,
Fig. 3 eine Variante zu Fig. 2 und
Fig. 4 eine weitere Variante zu Fig. 2.

### Ausführungsformen der Erfindung

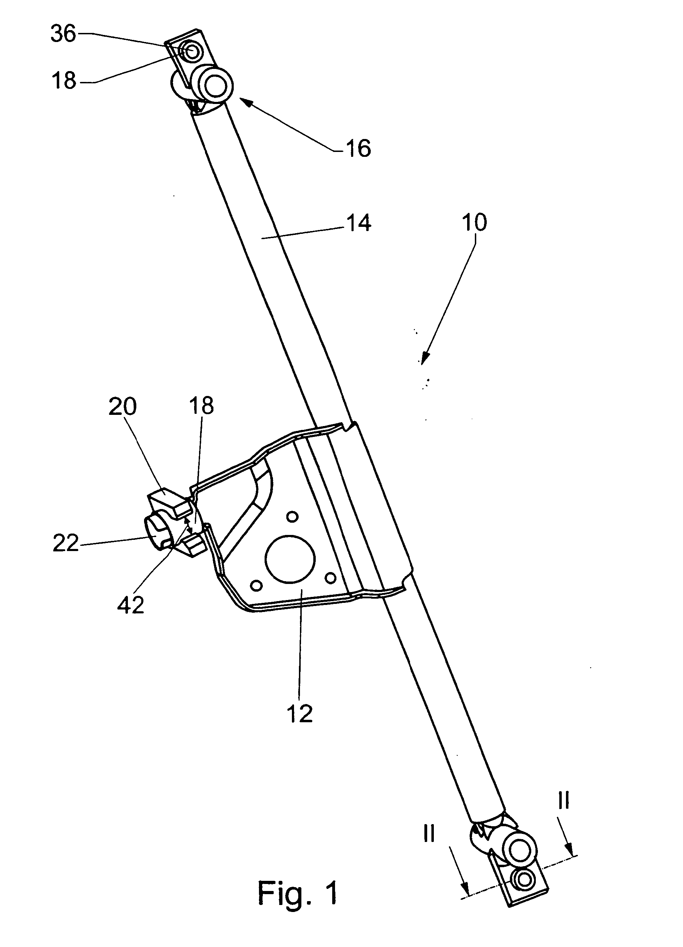

Eine Platine 10 umfasst ein Platinenrohr 14, an dem im mittleren Bereich eine als Motorplatine 12 dienende Platte angeordnet ist (Fig. 1). An den Enden des Platinenrohrs 14 ist jeweils ein Wischerlager 16 angeordnet, an das nach außen ein Gegenstück 36 angeformt ist. Am freien Ende der Motorplatine 12 ist ein Passteil 22 angeordnet. Dieses ist aus Druckguss, z.B. Aluminium, Zink oder einer geeigneten Legierung daraus, oder aus Spritzguss oder aus Blech. Die Gegenstücke 36 und das Passteil 22 sind mit einem Entkopplungselement 18 umgeben, die die Übertragung von Schwingungen der Platine 10 auf eine nicht näher dargestellte Fahrzeugkarosserie verhindern oder dämpfen, an der die Platine 10 befestigt ist. Die Entkopplungselemente 18 sind aus einem gummielastischen Werkstoff. Sie können in die angrenzenden Bauteile eingesetzt oder auf diese aufgesteckt oder aufgespritzt werden.

Das Passteil 22 wird an den Befestigungsstellen durch einen Montageschlitz 42 eines Schnappelements in Form einer Klammer 20 gedrückt, die vorzugsweise aus einem elastisch nachgiebigen Werkstoff besteht, z.B. Kunststoff oder einer Federkonstruktion aus Metall, und im montierten Zustand das Passteil 22 umgreift, sodass das Passteil 22 an seinem Umfang unter Zwischenschalten des Entkopplungselements 18 in einem Aufnahmesitz der Klammer 20 mit einer Vorspannung gehalten wird. Die Klammern 20 sind mit einem abgeflachten Teil ihres Umfangs an der Fahrzeugkarosserie durch Schweißen, Nieten, Klipsen usw. befestigt, wobei der Montageschlitz 42 so ausgerichtet ist, dass das Passteil 22 der Platine 10 bei der Montage einfach in die Klammern 20 gedrückt werden kann.

Die Schnappelemente im Bereich der Wischerlager 16 umfassen jeweils ein Befestigungsteil 32, das an der Karosserie befestigt ist und einen kugelförmigen Kopf 56 besitzt, und das Gegenstück 36, das mit der Platine 10 verbunden ist. Der Befestigungsteil 32 wird durch eine geringfügig engere Öffnung eines Gegenstücks 36 in einen Kugelsitz 60 gedrückt und rastet dort ein. Der Kugelsitz 60 umfasst den kugelförmigen Kopf 56 mit einem leichten Presssitz, sodass das Gegenstück 36 in begrenztem Umfang drei rotatorische Freiheitsgrade besitzt. Das Gegenstück 36 ist unter Zwischenlage eines Entkopplungselements 18 in eine Öffnung der Platine, z.B. im Bereich der Wischerlager 16 oder der Motorplatine 12 eingesetzt.

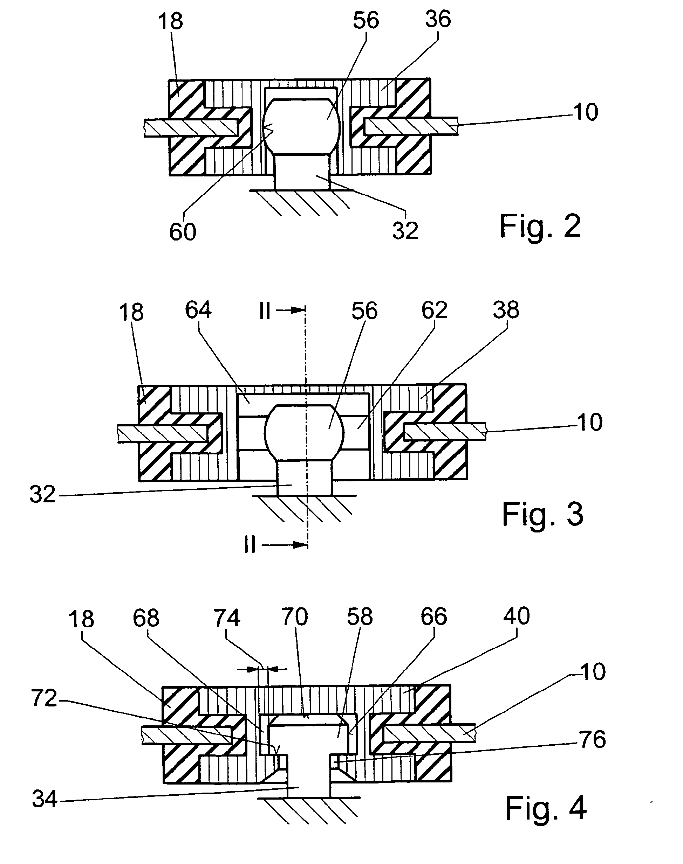

Bei einer Variante nach Fig. 3 wird der kugelförmige Kopf 56 des Befestigungselements 32 durch eine Öffnung eines Gegenstücks 38 in zwei einander gegenüberliegende Führungsnuten 62 einer Längsführung 64 gedrückt und rastet dort ein. Das Gegenstück 38, das in gleicher Weise wie das Gegenstück 36 nach Fig. 2 in die Platine 10 eingesetzt ist, besitzt relativ zum Befestigungsteil 32 neben den drei erwähnten rotatorischen Freiheitsgraden einen translatorischen Freiheitsgrad in Richtung der Führungsnuten 62. Die Fig. 2 kann gleichzeitig als Schnitt entsprechend der Linie II-II in Fig. 3 gedeutet werden.

Die Ausführung nach Fig. 4 besitzt ein Befestigungselement 34 mit einem flachen Kugelkopf 58, der zwischen einer Stirnfläche 70 und einer Anlagefläche 72 eines Aufnahmeraums 68 eines Gegenstücks 40 geführt ist. Der Aufnahmeraum 68 weist zur Umfangsfläche 66 des Kopfs 58 einen Abstand 74 auf, während der übrige Teil des Befestigungselements 34 mit einem Spiel 76 durch eine Öffnung des Gegenstücks 40 herausragt. Der Kopf 58 und die Öffnung des Gegenstücks 40 besitzen zur vereinfachten Montage jeweils eine Anlaufschräge, sodass der Kopf 58 mit einem ausreichenden Druck durch die Öffnung in den Aufnahmeraum 68 des Gegenstücks 40 gedrückt werden kann und dort einrastet. Die so geschaffene Verbindung besitzt einen rotatorischen Freiheitsgrad und innerhalb des Abstands 74 bzw. des Spiels 76 zwei translatorische Freiheitsgrade in einer Ebene, die durch die Stirnfläche 70 und die Anlagefläche 72 bestimmt ist.

Die Schnappelemente in Form einer Klammer 20 oder in Form der Befestigungselemente 32, 34 in Verbindung mit den Gegenstükken 36, 38, 40 können an den verschiedenen Befestigungsstellen im Bereich der Wischerlager 16 und der Motorplatine 12 miteinander und ggf. mit Schraubverbindungen je nach der aktuellen Einbausituation kombiniert werden.

## Patentansprüche

1. Befestigungsanordnung einer Scheibenwischeranlage, die mittels einer Platine (10) an mehreren Stellen einer Fahrzeugkarosserie befestigt ist, wobei mindestens eine Befestigungsstelle ein Schnappelement aufweist, das ein Befestigungselement (32, 34) besitzt, an dessen freiem Ende ein Kopf (56, 58) angeformt ist, auf den ein entsprechendes Gegenstück aufgepresst wird und verrastet, **dadurch gekennzeichnet, dass** das Befestigungselement (32, 34) ortsfest an der Fahrzeugkarosserie angeordnet ist und der Kopf (56, 58) mit einer kugelförmigen Oberfläche in dem Gegenstück (36, 38, 40) beweglich gelagert ist, das mit der Platine (10) verbunden ist.

2. Befestigungsanordnung nach Anspruch 1, **dadurch gekennzeichnet, dass** der Kopf (56) des Befestigungselements (32) die Gestalt einer Kugel hat und das Gegenstück (36) einen Kugelsitz (60) aufweist.

3. Befestigungsanordnung Anspruch 1, **dadurch gekennzeichnet, dass** der Kopf (56) des Befestigungselements (32) die Gestalt einer Kugel hat und in zwei einander gegenüberliegenden Führungsnuten (62) einer Längsführung (64) des Gegenstücks (38) gelagert ist.

4. Befestigungsanordnung nach Anspruch 1, **dadurch gekennzeichnet, dass** der Kopf (58) des Befestigungselements (34) zwei parallele Führungsflächen besitzt, die zwischen einer Stirnfläche (70) und einer Anlagefläche (72) geführt sind, sodass das Befestigungselement (34) innerhalb eines Abstands (74) zwischen einer äußeren Umfangsfläche (66) seines Kopfs (58) und einer inneren Umfangsfläche eines Aufnahmeraums (68) des Gegenstücks (40) bzw. innerhalb eines Spiels (76) zwischen dem Befestigungselement (34) und dem Gegenstück (40) in einer Ebene allseitig relativ zum Gegenstück (40) ausgerichtet werden kann.

5. Befestigungsanordnung nach einem der Ansprüche 1 bis 4, **dadurch gekennzeichnet, dass** das Gegenstück (36, 38, 40) unter Zwischenschalten eines Entkopplungselements (18) in die Platine (10) eingesetzt ist.

## Claims

1. Mounting arrangement of a windscreen wiper device which is mounted at a plurality of locations on a vehicle body by means of a plate (10), wherein at least one mounting point has a snap-in element which has a mounting element (32, 34), at the free end of which a head (56, 58) is integrally formed, onto which a corresponding counterpart is pressed and latches, **characterized in that** the mounting element (32, 34) is arranged in a fixed position on the vehicle body, and the head (56, 58) is mounted movably by means of a spherical surface in the counterpart (36, 38, 40) which is connected to the plate (10).

2. Mounting arrangement according to Claim 1, **characterized in that** the head (56) of the mounting element (32) is in the form of a ball, and the counterpart (36) has a ball seat (60).

3. Mounting arrangement according to Claim 1, **characterized in that** the head (56) of the mounting element (32) is in the form of a ball and is mounted in two mutually opposite guide grooves (62) of a longitudinal guide (64) of the counterpart (38).

4. Mounting arrangement according to Claim 1, **characterized in that** the head (58) of the mounting element (34) has two parallel guide surfaces which are guided between an end surface (70) and a bearing surface (72) such that the mounting element (34), within a distance (74) between an outer circumferential surface (66) of the head (58) thereof and an inner circumferential surface of a receiving space (68) of the counterpart (40) and within a clearance (76) between the mounting element (34) and the counterpart (40), can be aligned in a plane on all sides relative to the counterpart (40).

5. Mounting arrangement according to one of Claims 1 to 4, **characterized in that** the counterpart (36, 38, 40) is inserted into the plate (10) with the interconnection of a decoupling element (18).

## Revendications

1. Dispositif de fixation d'une installation d'essuie-glace, qui est fixée au moyen d'une platine (10) en plusieurs emplacements d'une carrosserie de véhicule, au moins un emplacement de fixation présentant un élément encliquetable qui possède un élément de fixation (32, 34) à l'extrémité libre duquel est façonnée une tête (56, 58), sur laquelle est pressée et encliquetée une pièce conjuguée correspondante, **caractérisé en ce que** l'élément de fixation (32, 34) est disposé fixement sur la carrosserie du véhicule et la tête (56, 58) est montée mobile avec une surface de forme sphérique dans la pièce conjuguée (36, 38, 40) qui est connectée à la platine (10).

2. Dispositif de fixation selon la revendication 1, **caractérisé en ce que** la tête (56) de l'élément de fixation (32) présente la forme d'une sphère et la pièce conjuguée (36) présente un siège sphérique (60).

3. Dispositif de fixation selon la revendication 1, **caractérisé en ce que** la tête (56) de l'élément de fixation (32) a la forme d'une sphère et est montée dans deux rainures de guidage opposées l'une à l'autre (62) d'un guide longitudinal (64) de la pièce conjuguée (38).

4. Dispositif de fixation selon la revendication 1, **caractérisé en ce que** la tête (58) de l'élément de fixation (34) possède deux surfaces de guidage parallèles qui sont guidées entre une surface frontale (70) et une surface d'appui (72), de sorte que l'élément de fixation (34) puisse être orienté dans un plan de tous les côtés par rapport à la pièce conjuguée (40) à l'intérieur d'un intervalle (74) entre une surface périphérique extérieure (66) de sa tête (58) et une surface périphérique intérieure d'un logement de réception (68) de la pièce conjuguée (40), ou à l'intérieur d'un jeu (76) entre l'élément de fixation (34) et la pièce conjuguée (40).

5. Dispositif de fixation selon l'une quelconque des revendications 1 à 4, **caractérisé en ce que** la pièce conjuguée (36, 38, 40) est insérée dans la platine (10) en interposant un élément de désaccouplement (18).
